# EUROPÄISCHE PATENTSCHRIFT

(11) **EP 4 567 062 B1**
(45) Veröffentlichungstag und Bekanntmachung des Hinweises auf die Patenterteilung: **11.02.2026**
(21) Anmeldenummer: 23214365.1
(22) Anmeldetag: 05.12.2023
(51) Int. Cl.: C08L 7/00, B60C 1/00, C08L 9/00, C08L 15/00, C08L 21/00

(54) **SCHWEFELVERNETZBARE KAUTSCHUKMISCHUNG, VULKANISAT UND FAHRZEUGREIFEN**
SULFUR-CROSSLINKABLE RUBBER MIXTURE VULCANIZATE AND VEHICLE TYRE
MÉLANGE DE CAOUTCHOUC RÉTICULABLE AU SOUFRE, VULCANISAT ET PNEU DE VÉHICULE

(43) Veröffentlichungstag der Anmeldung: 11.06.2025
(73) Patentinhaber: Continental Reifen Deutschland GmbH, 30175 Hannover (DE)
(72) Erfinder: SCHWARZENDAHL, Corinna, 30175 Hannover (DE); WANGENHEIM, Ulrike, 30175 Hannover (DE); VATTEROTT, Christoph, 30175 Hannover (DE); SCHWEKENDIEK, Kirsten, 30175 Hannover (DE)
(74) Vertreter: Continental Corporation

(56) Entgegenhaltungen:
- EP-A1- 2 412 731
- EP-A1- 3 296 354
- EP-A1- 4 056 644

## Beschreibung

Die vorliegende Erfindung betrifft eine schwefelvernetzbare Kautschukmischung, ein Vulkanisat, ein Bauteil und einen entsprechenden Fahrzeugreifen.

Die Kautschukzusammensetzung des Laufstreifens bestimmt in hohem Maße die Fahreigenschaften eines Reifens, insbesondere eines Fahrzeugluftreifens. Ebenso sind die schwefelvernetzbaren Kautschukmischungen, die in Riemen, Schläuchen und Gurten vor allem in den mechanisch stark belasteten Stellen Verwendung finden, für Stabilität und Langlebigkeit dieser Gummiartikel im Wesentlichen verantwortlich. Daher werden an diese schwefelvernetzbaren Kautschukmischungen für Fahrzeugluftreifen, Gurte, Riemen und Schläuche sehr hohe Anforderungen gestellt.

Schwefelvernetzbare Kautschukmischungen zur Herstellung von Laufstreifen sind aus dem Stand der Technik bekannt.

Die EP2662402B1 beschreibt eine Mischung wenigstens zweier Dienkautschuke, 0,1-20 phr eines C9-Harzes und 0,1-7 phr eines weiteren Verarbeitungswirkstoffes. Hierbei wird davon ausgegangen, dass die Gegenwart des Harzes die Homogenität des Polymerverschnitts verbessert.

Die US 2012/0289647 beschreibt die Verbesserung des Abriebverhaltens einer Laufstreifenmischung ohne signifikante Verschlechterung der Rollwiderstands- und Nassbremseigenschaften durch die Kombination von funktionalisiertem Dienkautschuk mit mindestens einem aliphatischen und/oder aromatischem Harz und mindestens einem Füllstoff.

Die DE102018211763A1 beschreibt eine Mischung, die 10-100 phr zumindest eines Butadien-Kautschuks, der aminofunktionalisiert ist und einen cis-Anteil von weniger als 80% aufweist und 25 phr mindestens eines Rußes aufweist. Ein Beispiel der Ausführungsform enthält 40- 60 phr Kautschuk und 60 bis 40 phr wenigstens eines Polyisoprens, bevorzugt NR, wobei bevorzugt kein dritter Kautschuk enthalten ist. Des Weiteren wird eine Ausführungsform offenbart, die weniger als 90 phr Kautschuk und 10 phr eines Polyisoprens, bevorzugt 10 phr NR sowie eines dritten Dienkautschuks aus der Gruppe der Butadien-Kautschuke (SSBR, ESBR und BR) enthält.

Die EP2853557A1 beschreibt eine Mischung, umfassend 5-95 phr zumindest eines lösungspolymerisiertem SBR, der aminofunktionalisiert ist und dessen Styrol Gehalt 0,1 bis 12 Gew.-% beträgt und der im unvulkanisiertem Zustand einen Glasübergangsbereich von -75 bis -120°C aufweist, 5-95 phr zumindest eines weiteren Dienkautschuks und 20 bis 150 phr zumindest eines Rußes. Gemäß einer weiteren bevorzugten Ausführungsform wird der o.g. aminofunktionalisierte SSBR mit einem hoch T_{g} SSBR (T_{g} = -40 bis +10°C) verschnitten, wobei ein natürliches und oder synthetisches Polymer zugegen sein kann.

Zusammenfassend, werden jedoch bekannte Mischungen, umfassend drei Kautschuke (Triblends), wie beispielsweise NR, (funktionalisierter) SSBR und Standard BR (z.B. Nd-BR) aber auch weitere dem Fachmann bekannte Kautschuke den aktuellen Ansprüchen an die Nassgriff- und Rollwiderstandseigenschaften bei gleichzeitig hoher Abrieb- und Widerstandsfähigkeit nicht mehr gerecht. Ferner ist insbesondere die Riss- und Schnittfestigkeit ("Chip & Chunk") verbesserungsbedürftig.

Genauso wenig werden Mischungen aus zwei Kautschuken (Diblends), umfassend Polyisopren (natürlich und/oder synthetisch) und einem aminofunktionalisierten BR den genannten Ansprüchen gerecht.

Es war daher die Aufgabe der vorliegenden Erfindung, eine schwefelvernetzbare Kautschukmischung, insbesondere zur Herstellung eines Laufstreifens für einen Fahrzeugreifen, bereitzustellen, die die Nachteile des Stands der Technik überwindet und insbesondere verbesserte Riss- und Schnittfestigkeit bei gleichzeitig hohen Abrieb und Rollwiderstandseigenschaften bereitzustellen. Dabei soll insbesondere die Riss- und Schnittfestigkeit im Laufe des Einsatzes (nach Alterung) verbessert werden.

Übrige Eigenschaften (wie Abrieb- und Nassgrifffähigkeit, Rollwiderstand und Prozessierbarkeit) der schwefelvernetzbaren Kautschukmischung sollen dabei vorzugsweise zumindest auf einem vergleichbaren Niveau verbleiben oder sogar ebenfalls verbessert werden.

Wird im Rahmen der vorliegenden Anmeldung von der Verbesserung von Eigenschaften der schwefelvernetzbaren Kautschukmischung gesprochen, so bezieht sich das analog auf die Verbesserung der Eigenschaften eines Vulkanisats erhalten aus der schwefelvernetzbaren Kautschukmischung.

Die vorliegende Aufgabe wurde überraschenderweise durch eine schwefelvernetzbare Kautschukmischung gemäß Anspruch 1 gelöst, d.h. durch eine schwefelvernetzbare Kautschukmischung, umfassend
- 40 bis 80 phr mindestens eines Polyisoprens,
- 10 bis 40 phr mindestens eines Butadien-Kautschuks, der aminofunktionalisiert ist und einen cis-Anteil von weniger als 80 % aufweist, und
- 10 bis 50 phr mindestens eines funktionalisierten SBR Kautschuks, vorzugsweise eines funktionalisierten SSBR Kautschuks.

Überraschenderweise hat sich herausgestellt, dass durch die Kombination der oben genannten Bestandteile, also insbesondere durch die Kombination der drei spezifischen Kautschuke verbesserte Riss- und Schnittbeständigkeit bei gleichzeitig hoher Abrieb- und Nassgrifffähigkeit erreicht werden. Ferner wird insbesondere die Riss- und Schnittfestigkeit nach Alterung verbessert. Übrige Eigenschaften verbleiben auf einem guten Niveau oder werden ebenfalls verbessert, wodurch sich eine solche schwefelvernetzbare Kautschukmischung insbesondere bei der Anwendung in Fahrzeugreifen als vorteilhaft erweist.

Ein weiterer Gegenstand der vorliegenden Erfindung betrifft ein Vulkanisat, welches durch die Schwefelvulkanisation wenigstens einer schwefelvernetzbaren Kautschukmischung, wie vorstehend definiert, erhalten wird.

Ein weiterer Gegenstand der vorliegenden Erfindung betrifft ein Bauteil, umfassend ein solches Vulkanisat.

Ein weiterer Gegenstand der vorliegenden Erfindung betrifft einen Fahrzeugreifen, umfassend mindestens ein solches Bauteil.

Bei zweigeteilten Laufstreifen (oberer Teil: Cap und unterer Teil: Base) kann die erfindungsgemäße schwefelvernetzbare Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen schwefelvernetzbaren Kautschukmischung auf.

Die erfindungsgemäße schwefelvernetzbare Kautschukmischung ist ferner auch für Laufstreifen geeignet, die aus verschiedenen nebeneinander und/oder untereinander angeordneten Laufstreifenmischungen bestehen (Multikomponentenlaufstreifen).

Unter Fahrzeugreifen werden im Rahmen der vorliegenden Erfindung vorzugsweise Fahrzeugluftreifen und Vollgummireifen, inklusive Reifen für Industrie- und Baustellenfahrzeuge, LKW-, PKW- sowie Zweiradreifen verstanden. Besonders bevorzugt sind LKW-Luftreifen.

Die erfindungsgemäße schwefelvernetzbare Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Ein weiterer Gegenstand der vorliegenden Erfindung betrifft die Verwendung einer schwefelvernetzbaren Kautschukmischung oder eines Vulkanisats, jeweils wie vorstehend definiert, zur Herstellung eines technischen Gummiartikels, wie Fahrzeugreifen, insbesondere eines Laufstreifens und/oder einer Seitenwand für einen Fahrzeugreifen, Bälge, Förderbänder, Luftfedern, Gurte, Riemen oder Schläuche, sowie Schuhsohlen.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat, das erfindungsgemäße Bauteil und den erfindungsgemäßen Fahrzeugreifen, sowie die erfindungsgemäße Verwendung.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

In der vorliegenden Beschreibung und den Ansprüchen sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente, Komponenten und/oder Gruppen spezifizieren, aber nicht das Vorhandensein oder Hinzufügen eines oder mehrerer anderer Merkmale, Schritte, Operationen, Elemente, Komponenten und/oder Gruppen davon ausschließen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke mit einem Molekulargewicht Mw gemäß GPC (Gel-Permeations-Chromatographie) von größer als 20000 g/mol bezogen.

Die schwefelvernetzbare Kautschukmischung enthält, 40 bis 80 phr mindestens eines Polyisoprens.

Das Polyisopren kann dabei vorzugsweise synthetisches Polyisopren (IR) und/oder Polyisopren natürlichen Ursprungs (NR) sein.

Bei dem Polyisopren kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 % ist.

Ferner ist auch ein Gemisch eines oder mehrerer natürlicher Polyisoprene mit einem oder mehreren synthetischen Polyisopren(en) denkbar.

Gemäß einer bevorzugten Ausführungsform der Erfindung enthält die schwefelvernetzbare Kautschukmischung 50 bis 70 phr, besonders bevorzugt 55 bis 65 phr, am bevorzugtesten 58 bis 62 phr wenigstens eines Polyisoprens (am bevorzugtesten gilt dies für ein natürliches Polyisopren (NR)).

Die schwefelvernetzbare Kautschukmischung enthält ferner 10 bis 40 phr mindestens eines Butadien-Kautschuks, der aminofunktionalisiert ist und einen cis-Anteil von weniger als 80 % aufweist.

Unter "aminofunktionalisiert" ist im Rahmen der vorliegenden Anmeldung zu verstehen, dass der Kautschuk an wenigstens einem Kettenende jeweils einer Polymerkette eine oder mehrere Aminogruppen trägt. Insbesondere können auch beide Kettenenden jeweils einer Polymerkette eine oder mehrere Aminogruppe(n) tragen.

Es ist denkbar, dass nicht alle Polymerketten eine Aminogruppe aufweisen. Der Gewichtsanteil von aminofunktionalisierten Polymerketten beträgt dabei bevorzugt 30 bis 100 %, besonders bevorzugt 50 bis 100 % und ganz besonders bevorzugt 70 bis 100 %.

Aminogruppen (-NR2) weisen bekanntermaßen am Stickstoffatom neben der Anbindung an die jeweilige Hauptkette einer Kohlenwasserstoffverbindung zwei weitere Reste (R) auf. Für den Fall, dass beide weiteren Reste Wasserstoffatome (R-H) sind, handelt es sich bei der Aminogruppe um eine primäre Aminogruppe. Für den Fall, dass ein weiterer Rest ein Wasserstoffatom und der andere Rest kein Wasserstoffatom ist, handelt es sich bei der Aminogruppe um eine sekundäre Aminogruppe. Für den Fall, dass beide Reste keine Wasserstoffatome sind, handelt es sich bei der Aminogruppe um eine tertiäre Aminogruppe.

Im Rahmen der vorliegenden Erfindung sind prinzipiell alle Aminogruppen als Funktionalisierung des Butadien-Kautschuks denkbar.

Gemäß einer vorteilhaften Ausführungsform der Erfindung handelt es sich bei den Aminogruppen um tertiäre Aminogruppen. Hierdurch ergeben sich gesundheitliche und ökologische Vorteile, da eine Bildung von schädlichen Substanzen, wie beispielsweise Nitrosaminen, stärker vermieden wird.

Butadien-Kautschuk (BR) ist der fachkundigen Person auch als Polybutadien bekannt. Hierbei ist bekannt, dass sich Polybutadiene unter anderem hinsichtlich ihres cis-Anteils differenzieren lassen, wobei Polybutadiene mit einem cis-Anteil größer oder gleich 90 % als high-cis-Typen und Polybutadiene mit einem cis-Anteil kleiner als 90 % als low-cis-Typen bezeichnet werden. Ein low-cis-Polybutadien ist z.B. Li-BR (Lithium-katalysierter Butadien-Kautschuk) mit einem cis-Anteil von 20 bis 50 %.

Der cis-Anteil in Prozent bezieht sich auf 100% einer Polymerkette. Die Bestimmung des cis-Anteils erfolgt gemäß 13C-NMR-Messungen (Probenextraktion mit Aceton; Lösungsmittel CDCl₃).

Der erfindungsgemäß enthaltene Butadien-Kautschuk weist einen cis-Gehalt von weniger als 80 %, bevorzugt dabei im Bereich von 20 bis 80 %, auf.

Gemäß vorteilhafter Ausführungsformen der Erfindung beträgt der cis-Anteil des aminofunktionalisierten Butadien-Kautschuks B 20 bis 60 %, bevorzugt 30 bis 50 %.

Der erfindungsgemäß enthaltene Butadien-Kautschuk ist insbesondere mittels anionischer Polymerisation hergestellt, wodurch im Vergleich zu anderen Herstellungsverfahren mehr Kettenenden für die Funktionalisierung zur Verfügung stehen. Hierdurch ergeben sich die erfindungsgemäßen Vorteile in besonderem Maße.

Gemäß einer vorteilhaften Ausführungsform der Erfindung enthält die schwefelvernetzbare Kautschukmischung 15 bis 30 phr, weiter vorzugsweise 15 bis 25 phr, besonders bevorzugt 18 bis 22 phr des aminofunktionalisierten Butadien-Kautschuks.

Butadien-Kautschuk ist bekanntermaßen ein Dienkautschuk, wodurch die erfindungsgemäße Kautschukmischung schwefelvernetzbar ist.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Die schwefelvernetzbare Kautschukmischung enthält zudem 10 bis 50 phr mindestens eines funktionalisierten SBR Kautschuks.

Bei dem funktionalisierten SBR Kautschuk handelt es sich vorzugsweise um einen lösungspolymerisierten Styrol-Butadien-Kautschuk (SSBR).

Vorzugsweise weist dieser einen Styrolgehalt von 8 bis 20%, bevorzugt von 10 bis 20%, besonders bevorzugt von 12 bis 18% und/oder (vorzugsweise und) einen Vinylgehalt von 25 bis 45%, vorzugsweise von 25 bis 40%, vorzugsweise von 27 bis 35% auf.

Der SBR Kautschuk ist dabei vorzugsweise für Ruß und/oder Silika funktionalisiert, besonders bevorzugt mindestens für Ruß. Vorzugsweise ist der SBR Kautschuk für Ruß und Silika funktionalisiert. Dies gilt besonders bevorzugt für den bevorzugten SSBR.

Der in der Mischung eingesetzte funktionalisierte SBR Kautschuk (vorzugsweise SSBR Kautschuk) weist vorzugsweise eine oder mehr als eine Funktionalisierung auf, vorzugsweise ausgewählt aus der Gruppe bestehend aus Silansulfidgruppen, Aminogruppen, Hydroxylgruppen, Epoxygruppen, Siloxangruppen, Phthalocyaningruppen, und Carboxygruppen; besonders bevorzugt bestehend aus Silansulfidgruppen und Aminogruppen, ganz besonders bevorzugt handelt es sich um eine Funktionalisierung mit Silansulfidgruppen. Besonders bevorzugte Silansulfidgruppen sind bekannt aus WO 2007/047943 A2. Besonders bevorzugte Aminogruppen sind Aminosilangruppen (d.h. Aminogruppen, die vorzugsweise über einen spacer mit einem Siliciumatom verbunden sind), die vorzugsweise jeweils entweder geschützt oder ungeschützt sind. Bevorzugte Aminogruppen sind bekannt aus WO 03/029299 A1 und WO 2008/123164 A1.

Die eine oder mehr als eine Funktionalisierung bewirkt vorzugsweise eine Wechselwirkung mit den in der Mischung enthaltenden Füllstoffen, vorzugsweise mit Rußen.

Der SBR Kautschuk, vorzugsweise der SSBR Kautschuk, weist insbesondere eine niedrige T_{g}, vorzugsweise kleiner als -50°C, vorzugsweise von kleiner als -55°C, auf. Besonders bevorzugt liegt die T_{g} im Bereich von -85 bis -50°C, vorzugsweise von -80 bis -50°C, weiter bevorzugt von -75 bis -55°C, am bevorzugtesten von -70 bis -55°C.

Besonders geeignete SSBR Kautschuke umfassen vorzugsweise 13 bis 18% Styrol und 27 bis 33% Vinyl und weisen ferner eine T_{g} im Bereich von -63 bis - 58°C auf.

Sofern nicht anders angegeben wird die T_{g} gemäß DSC nach ISO 22768(2020E) bestimmt.

In einer weiteren bevorzugten Ausführungsform ist die erfindungsgemäße schwefelvernetzbare Kautschukmischung vorzugsweise dadurch gekennzeichnet, dass die schwefelvernetzbare Kautschukmischung ferner mindestens einen Füllstoff enthält.

Als Füllstoffe kommen insbesondere Ruß, Graphit und Graphene und sogenannte "carbon-silica dual-phase filler", Kreide, Stärke, Magnesiumoxid, Titandioxid oder Kautschukgele sowie Fasern (wie zum Beispiel Aramidfasern, Glasfasern, Carbonfasern, Cellulosefasern) in Frage. Besonders bevorzugt ist ein oder mehr als ein Ruß als Füllstoff.

Zinkoxid, vorzugsweise in der erfindungsgemäßen Katuschukmischung enthalten, wird im Kontext der vorliegenden Erfindung nicht zu den Füllstoffen gezählt.

Vorzugsweise umfasst der mindestens eine Füllstoff einen Ruß, der eine Jodadsorptionszahl gemäß ASTM D 1510 von 80 bis 180 g/kg aufweist und/oder eine DBP-Zahl gemäß ASTM D 2414 von 110 bis 200 ml/100 g aufweist.

Besonders bevorzugt enthält die schwefelvernetzbare Kautschukmischung wenigstens einen Ruß der eine Jodadsorptionszahl gemäß ASTM D 1510 von 110 bis 180 g/kg, bevorzugt 110 bis 150 g/kg, besonders bevorzugt 110 bis 140 g/kg, und/oder eine DBP-Zahl gemäß ASTM D 2414 von 110 bis 180 ml/100 g, bevorzugt 110 bis 160 ml/100 g, besonders bevorzugt 110 bis 150 ml/100 g, aufweist.

Besonders bevorzugt und beispielsweise enthält die schwefelvernetzbare Kautschukmischung damit Ruße des ASTM Typs N 121 und/oder N 220.

Hiermit wird in einer schwefelvernetzbaren Kautschukmischung enthaltend aminofunktionalisierten BR und funktionalisierten SBR, vorzugsweise funktionalisierter SSBR, überraschenderweise eine deutliche Verbesserung (Erhöhung) der Riss- und Schnittbeständigkeit im Einsatz am Reifen um 10% erzielt im Vergleich zu einem Diblend aus Polyisopren und aminofunktionalisiertem BR.

Die Menge des wenigstens einen Rußes beträgt bevorzugt 25 bis 100 phr, besonders bevorzugt 30 bis 100 phr, wiederum bevorzugt 35 bis 70 phr und gemäß einer ganz besonders bevorzugten Ausführungsform 45 bis 60 phr.

Unter der Menge des wenigstens einen Rußes ist im Fall von zwei oder mehreren Rußen die Gesamtmenge zu verstehen.

Ferner kann die schwefelvernetzbare Kautschukmischung weitere im Stand der Technik bekannte Ruße enthalten, die nicht in die Menge des vorstehend definierten Rußes eingehen. Weitere Ruße können als weitere Füllstoffe zugegeben sein, bevorzugt jedoch in vergleichsweise geringen Mengen, wie 0,1 bis 5 phr.

Sind neben Ruß weitere Füllstoff enthalten so sind diese vorzugsweise in einer Menge von 0,1 bis 50 phr enthalten.

Bevorzugt ist in der erfindungsgemäßen schwefelvernetzbare Kautschukmischung Ruß als alleiniger Füllstoff oder als Hauptfüllstoff enthalten, das heißt, dass die Rußmenge deutlich größer ist als die Menge an ggf. anderen enthaltenen Füllstoffen.

In einer weiteren Ausführungsform ist die schwefelvernetzbare Kautschukmischung vorzugsweise dadurch gekennzeichnet, dass sie im Wesentlichen frei von zugesetztem Silica und/oder Silan ist. Silica sei hier gleichbedeutend mit Kieselsäure.

Unter "im Wesentlichen frei" wird vorzugsweise verstanden, dass das zugesetzte Silica und/oder Silan in einer Menge von weniger als 4 phr, vorzugsweise weniger als 2 phr, in der schwefelvernetzbaren Kautschukmischung vorhanden ist.

Insbesondere ist die schwefelvernetzbare Kautschukmischung frei (bis auf unvermeidbare Verunreinigungen) von zugesetztem Silica und/oder (vorzugsweise und) Silan.

Die Vermeidung von zugesetztem Silica und/oder (vorzugsweise und) Silan wirkt sich positiv auf die Abriebfestigkeit aus.

In einer Ausführungsform ist die schwefelvernetzbare Kautschukmischung vorzugsweise dadurch gekennzeichnet, dass die schwefelvernetzbare Kautschukmischung weniger als 5 phr, vorzugsweise weniger als 3 phr an Weichmacher, insbesondere an Öl, umfasst.

Die Reduzierung der Menge an Weichmacher, insbesondere an Öl, wirkt sich positiv auf die Abriebfestigkeit aus.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Flüssig-Polymere, deren mittleres Molekulargewicht (Bestimmung per GPC = gel permeation chromatography, in Anlehnung an BS ISO 11344:2016) zwischen 500 und 20000 g/mol liegt. Werden in der erfindungsgemäßen schwefelvernetzbaren Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Flüssig-Polymeren und Mineralölen.

Bei der Verwendung von Mineralöl ist dieses bevorzugt ausgewählt aus der Gruppe, bestehend aus DAE (Destillated Aromatic Extracts), RAE (Residual Aromatic Extracts), TDAE (Treated Destillated Aromatic Extracts), MES (Mild Extracted Solvents), und naphthenischen Ölen.

In einer Ausführungsform ist die schwefelvernetzbare Kautschukmischung vorzugsweise dadurch gekennzeichnet, dass die schwefelvernetzbare Kautschukmischung im Wesentlichen frei von Harzen, insbesondere von Kohlenwasserstoffharzen, ist.

Unter "im Wesentlichen frei" wird vorzugsweise verstanden, dass die Menge an enthaltenen Harzen, insbesondere Kohlenwasserstoffharzen, weniger als 2 phr, vorzugsweise weniger als 1 phr, insbesondere weniger als 0,5 phr beträgt.

Insbesondere ist die schwefelvernetzbare Kautschukmischung frei (bis auf unvermeidbare Verunreinigungen) von Harzen, insbesondere Kohlenwasserstoffharzen.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische C5-Monomere, weitere ungesättigte Verbindungen, die kationisch polymerisiert werden können, enthaltend Aromaten und/oder Terpene und/oder Alkene und/oder Cycloalkene.

Insbesondere ist das Kohlenwasserstoffharz ausgewählt aus der Gruppe bestehend aus aliphatischen C5-Harzen und Kohlenwasserstoffharzen aus alpha-Methylstyrol und Styrol und weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf.

Auf solche Kohlenwasserstoffharze soll insbesondere verzichtet werden.

Die Vermeidung von Harzen, insbesondere Kohlenwasserstoffharzen wirkt sich positiv auf die Abriebfestigkeit aus.

Durch eine Vulkanisation wird das erfindungsgemäße Vulkanisat erhalten. Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden vorzugsweise in einem letzten Mischungsschritt der schwefelvernetzbaren Kautschukmischung zugesetzt.

Dabei ist der Beschleuniger vorzugsweise ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern, und Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), und N-tert.-Butyl-2-benzothiazylsulfenamid (TBBS).

Insbesondere umfasst der Vulkanisationsbeschleuniger N-Cyclohexyl-2-benzothiazolsufenamid (CBS).

Es ist bevorzugt, dass das Vulkanisat, das durch Vulkanisation der schwefelvernetzbaren Kautschukmischung erhalten wird, einen niedrigen Vernetzungsgrad aufweist. Dies resultiert aus der geringen Dosierung von Schwefel und/oder schwefelspendenden Substanzen und Vulkanisationsbeschleuniger und ist erkennbar an erhöhten Reißdehnungswerten.

Daher beträgt die enthaltene Menge des Vulkanisationsbeschleunigers, insbesondere des N-Cyclohexyl-2-benzothiazolsufenamids (CBS), weniger als 2 phr, insbesondere weniger als 1,5 phr ganz besonders weniger als 1,3 phr, insbesondere vorzugsweise bei einer Schwefelmenge kleiner als 1,5 phr oder kleiner als 1,3 phr oder kleiner als 1,1 phr.

Als schwefelspendende Substanz können dabei alle dem Fachmann bekannten schwefelspendenden Substanzen verwendet werden. Enthält die schwefelvernetzbare Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der schwefelvernetzbaren Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen schwefelvernetzbaren Kautschukmischung. Dem Fachmann sind die jeweiligen Mengen der Zudosierung bekannt. Bei der Zugabe von elementarem Schwefel betragen die Mengen im Fall einer schwefelvernetzbaren Kautschukmischung für den Wulst von Fahrzeugreifen beispielsweise 0 bis 5 phr (wobei der Wert 0 gerade ausgeschlossen ist). Für Laufstreifen von Fahrzeugreifen, die in der Regel gegenüber dem Wulst einen geringeren Schwefelgehalt aufweisen, beträgt die Menge an zuzugebendem elementaren Schwefel bevorzugt 0 bis 4 phr (wobei der Wert 0 gerade ausgeschlossen ist).

Des Weiteren ist die Schwefelmenge vorzugsweise kleiner als 1,5 phr oder kleiner als 1,3 phr oder kleiner als 1,1 phr (jedoch in allen Fällen vorzugsweise größer 0).

Außerdem können in der schwefelvernetzbaren Kautschukmischung Vulkanisationsverzögerer vorhanden sein, wie beispielsweise CTP (N-(Cyclohexylthio)phthalimid).

Die Begriffe "vulkanisiert" und "vernetzt" werden im Rahmen der vorliegenden Erfindung synonym verwendet.

Des Weiteren kann die schwefelvernetzbare Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
- Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
- Aktivatoren, wie z. B. Zinkoxid und Fettsäuren (z. B. Stearinsäure) und/oder sonstige Aktivatoren, wie Zinkkomplexe wie z.B. Zinkethylhexanoat,
- Wachse,
- Mastikationshilfsmittel, wie z. B. 2,2'-Dibenzamidodiphenyldisulfid (DBD) und
- Prozesshilfsmittel, wie insbesondere Fettsäureester und Metallseifen, wie z.B. Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann insbesondere Zinkoxid (ZnO) enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Zinkoxid ist vorzugsweise in einer Menge von 1 bis 5 phr, insbesondere von 3 phr, enthalten.

Die vorliegende Erfindung betrifft ferner ein Vulkanisat, welches durch die Schwefelvulkanisation wenigstens einer schwefelvernetzbaren Kautschukmischung wie vorstehend beschrieben, erhalten wird.

Unter Vulkanisation versteht man im Allgemeinen die Überführung von plastischen, kautschukartigen, ungesättigten oder gesättigten Polymeren durch Vernetzung mit Schwefel bzw. Schwefelverbindungen in den gummielastischen Zustand. Dabei werden die einzelnen Polymerketten irreversibel durch kovalente Bindungen miteinander verbunden. Das dadurch erhaltene Produkt ist das Vulkanisat, insbesondere das Schwefelvulkanisat.

Die vorliegende Erfindung betrifft ferner ein Bauteil, umfassend das Vulkanisat wie vorstehend beschrieben.

Die vorliegende Erfindung betrifft ferner einen Fahrzeugreifen, der in wenigstens einem Bauteil wenigstens ein Vulkanisat wie vorstehend beschrieben aufweist.

Die vorliegende Erfindung betrifft ferner einen Fahrzeugreifen, wobei es sich bei dem Bauteil wie vorstehend beschrieben um einen Laufstreifen, insbesondere einen Laufstreifen mit Rippenprofil, und/oder eine Seitenwand handelt.

Bei dem Fahrzeugreifen handelt es sich insbesondere um einen Reifen für ein Nutzfahrzeug, beispielsweise für einen Lastkraftwagen oder einen Autobus.

Die oben beschriebene schwefelvernetzbare Kautschukmischung ist besonders für die Herstellung von und für die Verwendung in Fahrzeugreifen, insbesondere Fahrzeugluftreifen geeignet. Daher ist der erfindungsgemäße Fahrzeugreifen vorzugsweise ein Fahrzeugluftreifen.

Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Herstellung von oder Verwendung in Fahrzeugreifen wird die Mischung vorzugsweise als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen schwefelvernetzbaren Kautschukmischung zur Verwendung als Seitenwand oder sonstige Body-Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten schwefelvernetzbare Kautschukmischung für eine oder mehrere unterschiedliche Body-Mischungen dienen dann dem Aufbau eines Reifenrohlings.

Als Body-Mischung werden hierbei die schwefelvernetzbaren Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage.

Die vorliegende Erfindung betrifft ferner die Verwendung einer schwefelvernetzbaren Kautschukmischung oder eines Vulkanisats, jeweils wie vorstehend beschrieben, zur Herstellung eines technischen Gummiartikels, wie Fahrzeugreifen, insbesondere eines Laufstreifens, insbesondere eines Laufstreifens mit Rippenprofil und/oder einer Seitenwand für einen Fahrzeugreifen, Bälge, Förderbänder, Luftfedern, Gurte, Riemen oder Schläuche, sowie Schuhsohlen.

Zur Verwendung der erfindungsgemäßen schwefelvernetzbaren Kautschukmischung in Riemen und Gurten, insbesondere in Fördergurten, wird vorzugsweise die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen schwefelvernetzbare Kautschukmischung, einer und/oder mehrerer Lagen gleicher und/oder verschiedener Festigkeitsträger und einer und/oder mehreren weiteren Lagen dergleichen und/oder einer anderen schwefelvernetzbaren Kautschukmischung.

Die Erfindung soll nun anhand von nichtbeschränkenden Vergleichs- und Ausführungsbeispielen näher erläutert werden.

### Beispiele

Die Mischungsherstellung erfolgte ansonsten nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 150 bis 160 °C, vermischt wurden. In der zweiten Stufe wurde die Mischung der ersten Mischstufe noch einmal durchmischt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 (gemessen am Moving Die Rheometer gemäß ASTM D 5289-12/ ISO 6502) unter Druck bei 140°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur mittels Durometer gemäß DIN ISO 484:2018
- Rückprallelastizität bei 70 °C und Raumtemperatur (RT) gemäß ISO 4662 oder ASTM D1054
- Zugfestigkeit, Reißdehnung und Spannungswert bei 300 % Dehnung (Modul 300, M300) bei Raumtemperatur (RT) gemäß DIN 53 504
- Chip % Chunk Performance und Alterung:
   Die Chip & Chunk Beständigkeit wird im Fahrversuch mit Reifen in 205/75 R17.5 CHS3 124 L auf Schlechtwegestrecken (Schotter) über eine Distanz von etwa 1000 km getestet. Anschließend werden die Mischungskandidaten im direkten Vergleich visuell nach Schadensausprägung bewertet.

Die Referenz wird zu 100 gesetzt - bessere Schadensbilder werden durch höhere Werte als 100 angegeben, Verschlechterungen mit kleineren Werten. Zur Bewertung des Effektes der Feldalterung wird ein zweiter Satz Reifen für den C&C Fahrzeugtest zuvor in einem Ofen bei 65°C für 28 Tage gelagert.

Die Vergleichsmischungen sind mit V, die erfindungsgemäße Mischung ist mit E gekennzeichnet.

**Tabelle 1:**

| | E | V1 | V2 | V3 |
|---|---|---|---|---|
| NR^{a)} TSR | 60 | 65 | 50 | 50 |
| Amino BR^{b} | 20 | 35 | 50 | 50 |
| Funktionalisierter SSBR^{c} | 20 | - | - | - |
| N121^{d} | 55 | 55 | 55 | |
| N220^{e} | | - | - | 55 |
| Kieselsäure^{f} (Silica) | 0 | 0 | 6 | 6 |
| Silan | 0 | 0 | 1,5 | 1,5 |
| Harz | 0 | 0 | 3 | 3 |
| ASM + Wachs | 6 | 6 | 6 | 6 |
| Weichmacher | 2 | 2 | 5 | 5 |
| Stearinsäure | 2 | 2 | 2 | 2 |
| ZnO | 3 | 3 | 3 | 3 |
| CBS | 1,1 | 1,1 | 2 | 2 |
| S | 0,9 | 0,9 | 1,1 | 1,1 |
| CTP | 0 | 0 | 0,15 | 0,15 |
| | | | | |
| Eigenschaften Cured @140°C - Labor | | | | |
| Shore Härte/ShA | 65 | 64 | 67 | 66 |
| Rückprallelastizität RT/% | 47 | 49 | 49 | 49 |
| Rückprallelastizität 70°C/% | 54 | 57 | 60 | 60 |
| Modul 300 RT/MPa | 11,9 | 12,8 | 14,4 | 12,8 |
| Zugfestigkeit RT /MPa | 23,6 | 23,8 | 22 | 20,8 |
| Reißdehnung RT/% | 537 | 513 | 455 | 461 |

| | | | | |
|---|---|---|---|---|
| Verwendete Substanzen aus Tabelle 1: a) natürliches Polyisopren b) Amino BR: Butadien-Kautschuk, aminofunktionalisiert, cis-Anteil weniger als 80 %: BR500, Fa. ENEOS Corporation c) SSBR: Sprintan^{®} SLR 3402, Fa. Synthos Group; 15% Styrol- und 30% Vinylanteil; T_{g} -62°C d) Ruße des ASTM Types N 121 e) Ruße des ASTM Types N 220 f) Kieselsäure VN3, Fa. Evonik | | | | |

Die Auswertung zeigt, dass die erfindungsgemäße schwefelvernetzbare Kautschukmischung als Mischung von drei Kautschuken (Triblend), wovon zwei Kautschuke so funktionalisiert sind, dass die Wechselwirkung zwischen Polymer und Ruß verbessert ist, zu einem Vulkanisat mit erhöhter Zugfestigkeit und Reißdehnung führt, wohingegen die Vergleichsmischung V1 auf dem Niveau des Stands der Technik des Diblends liegt.

Ferner wird eine Verbesserung der Chip & Chunk (C&C) Performance im Einsatz erreicht.

Obwohl der SSBR weitestgehend T_{g}-gleich mit NR ist, und damit hysteresegleich zum NR ist und damit die Energieaufnahmefähigkeit zwischen NR und SSBR gleich sein sollte, konnte überraschenderweise festgestellt werden, dass durch die Verwendung des Triblends die Chip and Chunk Beständigkeit verbessert wurde (delta ca. 10%).

Zusätzlich sieht man Vorteile nach Alterung, da der Modul 300 der schwefelvernetzbaren Kautschukmischung mit zwei Kautschuken (Diblend) nicht mehr gemessen werden kann. Der Triblend zeigt etwa um ca. 50% Zuwachs, im Diblend ist der Wert nicht mehr bestimmbar. Im Reifentest zeigt sich nun nach Alterung ein deutlicherer Vorteil von ca. 23%.

Somit ist es mit den erfindungsgemäßen schwefelvernetzbaren Kautschukmischungen möglich Vulkanisate in Form von Fahrzeugreifen zu erhalten, wobei die Schnitt- und Rissbeständigkeit weiter verbessert ist, während die übrigen Eigenschaften auf einem sehr guten Niveau liegen.

Ein erfindungsgemäßer Fahrzeugreifen, der wenigstens ein erfindungsgemäßes Vulkanisat der schwefelvernetzbaren Kautschukmischung in wenigstens einem Bauteil, insbesondere dem Laufstreifen, aufweist, ist hinsichtlich Haltbarkeit mit Hinblick auf das Gesamt-Niveau aus den übrigen Anforderungen Rollwiderstand, Abrieb und Handling optimiert.

Ein erfindungsgemäßer Fahrzeugreifen, der wenigstens ein erfindungsgemäßes Vulkanisat der schwefelvernetzbaren Kautschukmischung in wenigstens einem Bauteil, insbesondere dem Laufstreifen, aufweist, zeigt durch die niedrigere Rückprallelastizität eine verbesserte Dämpfung und verbessertes Nassbremsen (besserer Grip).

Insbesondere ist ein solcher Fahrzeugreifen, der wenigstens ein erfindungsgemäßes Vulkanisat der schwefelvernetzbaren Kautschukmischung in wenigstens einem Bauteil, insbesondere dem Laufstreifen, aufweist, hinsichtlich der Chip & Chunk Performance optimiert.

## Patentansprüche

1. Schwefelvernetzbare Kautschukmischung, umfassend
- 40 bis 80 phr mindestens eines Polyisoprens,
- 10 bis 40 phr mindestens eines Butadien-Kautschuks, der aminofunktionalisiert ist und einen cis-Anteil von weniger als 80 % aufweist, und
- 10 bis 50 phr mindestens eines funktionalisierten SBR Kautschuks.

2. Schwefelvernetzbare Kautschukmischung gemäß Anspruch 1, **dadurch gekennzeichnet, dass** der cis-Anteil des aminofunktionalisierten Butadien-Kautschuks 20 bis 60 %, bevorzugt 30 bis 50 %, beträgt.

3. Schwefelvernetzbare Kautschukmischung gemäß Anspruch 1 oder 2, **dadurch gekennzeichnet, dass** der mindestens eine funktionalisierte SBR Kautschuk eine T_{g} von kleiner als -50°C, vorzugsweise von kleiner als -55 °C, aufweist.

4. Schwefelvernetzbare Kautschukmischung gemäß irgendeinem der vorhergehenden Ansprüche, **dadurch gekennzeichnet, dass** die schwefelvernetzbare Kautschukmischung ferner mindestens einen Füllstoff enthält, vorzugsweise einen Ruß, der eine Jodadsorptionszahl gemäß ASTM D 1510 von 80 bis 180 g/kg aufweist und/oder eine DBP-Zahl gemäß ASTM D 2414 von 110 bis 200 ml/100 g aufweist.

5. Schwefelvernetzbare Kautschukmischung gemäß irgendeinem der vorhergehenden Ansprüche, **dadurch gekennzeichnet, dass** die schwefelvernetzbare Kautschukmischung im Wesentlichen frei von zugesetztem Silica und/oder Silan ist.

6. Schwefelvernetzbare Kautschukmischung gemäß irgendeinem der vorhergehenden Ansprüche, **dadurch gekennzeichnet, dass** die schwefelvernetzbare Kautschukmischung weniger als 5 phr, vorzugsweise weniger als 3 phr an Weichmacher, insbesondere an Öl, umfasst.

7. Schwefelvernetzbare Kautschukmischung gemäß irgendeinem der vorhergehenden Ansprüche, **dadurch gekennzeichnet, dass** die schwefelvernetzbare Kautschukmischung im Wesentlichen frei von Harzen, insbesondere von Kohlenwasserstoffharzen, ist.

8. Schwefelvernetzbare Kautschukmischung gemäß irgendeinem der vorhergehenden Ansprüche, **dadurch gekennzeichnet, dass** die schwefelvernetzbare Kautschukmischung weniger als 2 phr, insbesondere weniger als 1,5 phr ganz besonders weniger als 1,3 phr eines Vulkanisationsbeschleunigers umfasst, insbesondere vorzugsweise bei einer Schwefelmenge kleiner als 1,5 phr oder kleiner als 1,3 phr oder kleiner als 1,1 phr,

9. Vulkanisat, welches durch die Schwefelvulkanisation wenigstens einer Kautschukmischung nach einem der Ansprüche 1 bis 8 erhalten ist.

10. Bauteil, umfassend das Vulkanisat gemäß Anspruch 9.

11. Fahrzeugreifen, **dadurch gekennzeichnet, dass** er in wenigstens einem Bauteil wenigstens ein Vulkanisat nach Anspruch 9 aufweist.

12. Fahrzeugreifen gemäß Anspruch11, **dadurch gekennzeichnet, dass** es sich bei dem Bauteil um einen Laufstreifen, insbesondere einen Laufstreifen mit Rippenprofil, und/oder eine Seitenwand handelt.

13. Verwendung einer Kautschukmischung nach einem der Ansprüche 1 bis 8 oder eines Vulkanisats gemäß Anspruch 9 zur Herstellung eines technischen Gummiartikels, wie Fahrzeugreifen, insbesondere eines Laufstreifens, insbesondere eines Laufstreifens mit Rippenprofil und/oder einer Seitenwand für einen Fahrzeugreifen, Bälge, Förderbänder, Luftfedern, Gurte, Riemen oder Schläuche, sowie Schuhsohlen.

## Claims

1. Sulfur-crosslinkable rubber mixture comprising
- 40 to 80 phr of at least one polyisoprene,
- 10 to 40 phr of at least one butadiene rubber which is amino-functionalized and has a cis content of less than 80% and
- 10 to 50 phr of at least one functionalized SBR rubber.

2. Sulfur-crosslinkable rubber mixture according to Claim 1, **characterized in that** the cis content of the amino-functionalized butadiene rubber is 20% to 60%, preferably 30% to 50%.

3. Sulfur-crosslinkable rubber mixture according to Claim 1 or 2, **characterized in that** the at least one functionalized SBR rubber has a T_{g} of less than -50°C, preferably of less than -55 °C.

4. Sulfur-crosslinkable rubber mixture according to any of the preceding claims, **characterized in that** the sulfur-crosslinkable rubber mixture further contains at least one filler, preferably a carbon black, which has an iodine adsorption number according to ASTM D 1510 of 80 to 180 g/kg and/or a DBP number according to ASTM D 2414 of 110 to 200 ml/100 g.

5. Sulfur-crosslinkable rubber mixture according to any of the preceding claims, **characterized in that** the sulfur-crosslinkable rubber mixture is substantially free from added silica and/or silane.

6. Sulfur-crosslinkable rubber mixture according to any of the preceding claims, **characterized in that** the sulfur-crosslinkable rubber mixture comprises less than 5 phr, preferably less than 3 phr of plasticizers, especially of oil.

7. Sulfur-crosslinkable rubber mixture according to any of the preceding claims, **characterized in that** the sulfur-crosslinkable rubber mixture is substantially free from resins, especially from hydrocarbon resins.

8. Sulfur crosslinkable rubber mixture according to any of the preceding claims, **characterized in that** the sulfur-crosslinkable rubber mixture comprises less than 2 phr, especially less than 1.5 phr, very particularly less than 1.3 phr, of a vulcanization accelerator, especially preferably at a sulfur quantity of less than 1.5 phr or less than 1.3 phr or less than 1.1 phr.

9. Vulcanizate obtained by the sulfur vulcanization of at least one rubber mixture according to any of Claims 1 to 8.

10. Component comprising the vulcanizate according to Claim 9.

11. Vehicle tire, **characterized in that** it comprises at least one vulcanizate according to Claim 9 in at least one component.

12. Vehicle tire according to Claim 11, **characterized in that** the component is a tread, especially a tread having a ribbed profile, and/or a sidewall.

13. Use of a rubber mixture according to any of Claims 1 to 8 or of a vulcanizate according to Claim 9 for production of a technical rubber article, such as vehicle tires, especially a tread, especially a tread having a ribbed profile and/or a sidewall for a vehicle tire, bellows, conveyor belts, air springs, belts, drive belts or hoses, and shoe soles.

## Revendications

1. Mélange de caoutchouc réticulable au soufre, comprenant
- 40 à 80 phr d'au moins un polyisoprène,
- 10 à 40 phr d'au moins un caoutchouc butadiène qui est aminofonctionnalisé et présente une proportion de cis inférieure à 80 %, et
- 10 à 50 phr d'au moins un caoutchouc SBR fonctionnalisé.

2. Mélange de caoutchouc réticulable au soufre selon la revendication 1, **caractérisé en ce que** la proportion de cis du caoutchouc butadiène aminofonctionnalisé est de 20 à 60 %, de préférence de 30 à 50 %.

3. Mélange de caoutchouc réticulable au soufre selon la revendication 1 ou 2, **caractérisé en ce que** l'au moins un caoutchouc SBR fonctionnalisé présente une T_{g} inférieure à -50 °C, de préférence inférieure à -55 °C.

4. Mélange de caoutchouc réticulable au soufre selon au moins l'une quelconque des revendications précédentes, **caractérisé en ce que** le mélange de caoutchouc réticulable au soufre contient en outre au moins une charge, de préférence un noir de carbone, qui présente un indice d'adsorption d'iode selon ASTM 0 1510 de 80 à 180 g/kg et/ou une valeur du DBP selon ASTM D 2414 de 110 à 200 ml/100 g.

5. Mélange de caoutchouc réticulable au soufre selon l'une quelconque des revendications précédentes, **caractérisée en ce que** le mélange de caoutchouc réticulable au soufre est essentiellement exempt de silice et/ou de silane ajoutés.

6. Mélange de caoutchouc réticulable au soufre selon l'une quelconque des revendications précédentes, **caractérisé en ce que** le mélange de caoutchouc réticulable au soufre comprend moins de 5 phr, de préférence moins de 3 phr, de plastifiant, notamment d'huile.

7. Mélange de caoutchouc réticulable au soufre selon l'une quelconque des revendications précédentes, **caractérisé en ce que** le mélange de caoutchouc réticulable au soufre est essentiellement exempt de résines, notamment de résines hydrocarbonées.

8. Mélange de caoutchouc réticulable au soufre selon l'une quelconque des revendications précédentes, **caractérisé en ce que** le mélange de caoutchouc réticulable au soufre contient moins de 2 phr, notamment moins de 1,5 phr, tout particulièrement moins de 1,3 phr d'un accélérateur de vulcanisation, de manière particulièrement préférée avec une quantité de soufre inférieure à 1,5 phr ou inférieure à 1,3 phr ou inférieure à 1,1 phr.

9. Produit de vulcanisation qui est obtenu par vulcanisation par le soufre d'au moins un mélange de caoutchouc selon l'une des revendications 1 à 8.

10. Composant, comprenant le vulcanisat selon la revendication 9.

11. Pneumatique pour véhicule, **caractérisé en ce qu'**il présente dans au moins un composant au moins un produit de vulcanisation selon la revendication 9.

12. Pneu de véhicule selon la revendication 11, **caractérisé en ce que** le composant consiste en une bande de roulement, notamment une bande de roulement à profil nervuré, et/ou une paroi latérale.

13. Utilisation d'un mélange de caoutchouc selon l'une des revendications 1 à 8 ou d'un vulcanisat selon la revendication 9 pour la fabrication d'un article technique en caoutchouc, tel qu'un pneu de véhicule, notamment une bande de roulement, notamment une bande de roulement à profil nervuré et/ou une paroi latérale pour un pneu de véhicule, des soufflets, des bandes transporteuses, des ressorts pneumatiques, des courroies, des sangles ou des tuyaux, ainsi que des semelles de chaussures.
